## Europäisches Patentamt
## European Patent Office
## Office européen des brevets

(19)

(11) Veröffentlichungsnummer: **0 152 869**
**B1**

(12)

# EUROPÄISCHE PATENTSCHRIFT

(45) Veröffentlichungstag der Patentschrift:
**14.09.88**

(51) Int. Cl.⁴: **C 08 F 6/22,** C 08 C 1/15

(21) Anmeldenummer: **85101267.4**

(22) Anmeldetag: **07.02.85**

(54) Salzfrei aufgearbeitete Formmassen.

(30) Priorität: **18.02.84 DE 3405940**

(43) Veröffentlichungstag der Anmeldung:
**28.08.85 Patentblatt 85/35**

(45) Bekanntmachung des Hinweises auf die Patenterteilung:
**14.09.88 Patentblatt 88/37**

(84) Benannte Vertragsstaaten:
**DE FR GB IT NL**

(56) Entgegenhaltungen:
**DD - A - 213 931**
**DE - A - 2 846 757**
**GB - A - 929 704**

**CHEMICAL ABSTRACTS, Band 98, Nr. 24, Juni 1983,
Seite 55, Nr. 199551g, Columbus, Ohio, US; E.M. RIVIN:
"Salt-free coagulation of butadiene-styrene rubber
latexes"**

(73) Patentinhaber: **BAYER AG, Konzernverwaltung RP
Patentabteilung, D-5090 Leverkusen 1 Bayerwerk (DE)**

(72) Erfinder: **Eichenauer, Herbert, Dr., Goethestrasse 71,
D-4047 Dormagen 1 (DE)**
Erfinder: **Ott, Karl-Heinz, Dr., Paul-Klee-Strasse 54,
D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind elastisch-thermoplastische und thermoplastische pulverförmige Formmassen bzw. deren thermoplastisch verarbeitbare Gemische mit elastischen Formmassen, die aus den entsprechenden wäßrigen Latices salzfrei unter Verwendung eines rein organischen Fällmittelsystems hergestellt werden.

Die Überführung wäßriger Polymerisatlatices in Polymerpulver erfolgt üblicherweise so, daß die Koagulation der Latexteilchen durch Zugabe großer Mengen wäßriger Salzlösungen oder verdünnter Säuren ausgelöst wird. Bespiele dafür sind in der US-PS 2 366 460, der US-PS 3 108 983, der US-PS 3 248 455 oder der DE-AS 19 58 498 beschrieben.

Eine Überführung von Latices in festes Polymerpulver ohne Verwendung von Salzlösungen gelingt nur in speziellen Fällen, so z.B. gemäß US-PS 4 299 952 durch Anwendung einer kombinierten Scher- und Druckbelastung. Alle diese Verfahren besitzen jedoch den Nachteil, daß sie zu Abwasserbelastungen führen oder daß ein relativ großer technischer und energetischer Aufwand notwendig ist.

Gegenstand der Erfindung sind elastisch-thermoplastische und thermoplastische pulverförmige Formmassen bzw. deren thermoplastisch verarbeitbare Gemische mit elastischen Formmassen, die aus den entsprechenden wäßrigen Latices unter Verwendung eines Fällungsreagenzes aus

A) 0,1 bis 3,0 Gew.-% (bezogen auf den Latexfeststoff) eines Polyvinylacetats mit einem Molekulargewicht von 30 000 bis 150 000 und einem Verseifungsgrad zwischen 60 und 96% in Form einer wäßrigen Lösung und

B) 0,01 bis 1,0 Gew.-% (bezogen auf den Latexfeststoff) eines - Protonendonators, vorzugsweise einer Carbonsäure,

bei Temperaturen zwischen 75°C und 140°C, vorzugsweise zwischen 80°C und 100°C, koaguliert und durch Filtration, Abzentrifugieren oder sonstige Trennverfahren aus der 60 bis 140°C, vorzugsweise 70 bis 100°C heißen wäßrigen Phase isoliert werden.

Gegenüber den bisher bekannten thermoplastisch verarbeitbaren pulverförmigen Formmassen unterscheiden sich die erfindungsgemäßen Formmassen dadurch, daß ihre Koagulation salzfrei erfolgt, der verwendete Protonendonator nur in untergeordneten Mengen eingesetzt wird und alle zur Fällung eingesetzten Reagenzien biologisch abbaubar sind.

Als gemäß der Erfindung wirksame Polyvinylacetate werden solche mit einem Molekulargewicht von 30 000 bis 150 000 und einem Verseifungsgrad von 60 bis 96% eingesetzt. Bevorzugt sind dabei solche mit einem Verseifungsgrad von 75 bis 95%.

Die eingesetzte Menge an teilverseiftem Polyvinylacetat beträgt 0,1 bis 3,0 Gew.-%, bevorzugt 0,1 bis 1,0 Gew.-% (jeweils bezogen auf den Latexfeststoff).

Als Protonendonatoren können alle Brönsted-Säuren, vorzugsweise Carbonsäuren bzw. kohlenstoffhaltige Säuren bzw. Verbindungen, aus denen unter den angewandten Reaktionsbedingungen obengenannte Säuren entstehen, eingesetzt werden. Beispiele sind Ameisensäure, Essigsäure, Propionsäure, Oxalsäure, Acetanhydrid und Kohlendioxid. Ihr Einsatz erfolgt in Mengen von 0,01 bis 1,0 Gew.-% (bezogen auf den Latexfeststoff).

Teilverseiftes Polyvinylacetat und Säurekomponente können getrennt oder nach vorhergehender Mischung zum Latex gegeben werden. Die Zugabe kann bei jeder beliebigen Temperatur zwischen Raumtemperatur und 100°C erfolgen. Besonders schnelle Kornaushärtung erfolgt bei Einrühren der Lösung des teilverseiften Polyvinylacetats bei Raumtemperatur und Säurezusatz bei Temperaturen > 80°C.

Die Aufarbeitung der koagulierten Formmassen wird zur Verhinderung einer Redispergierung des Koagulats bei Temperaturen von 60 bis 140°C, vorzugsweise 70 bis 100°C, durchgeführt.

Erfindungsgemäß können alle als wäßrige Emulsion vorliegenden elastisch-thermopastischen und thermoplastischen Polymerisate bzw. deren thermoplastisch verarbeitbaren Gemische mit elastischen Polymerisaten gefällt werden, wenn bei deren Herstellung ≤5 Gew.-Teile (bezogen auf 100 Gew.-Teile Latexfeststoff) eines anionischen Emulgators eingesetzt wurden. Bevorzugt sind solche Latices, die unter Verwendung von ≤2 Gew.-Teilen Emulgator hergestellt wurden. Beispiele für solche Emulgatoren sind die Natrium-, Kalium- oder Ammoniumsalze langkettiger Fettsäuren mit 10 bis 20 C-Atomen, z.B. Kaliumoleat, Salze der disproportionierten Abietinsäure, Salze langkettiger Benzolsulfonate, z.B. Nan-Dodecylbenzolsulfonat und Salze von langkettigen Sulfonsäuren, z.B. die Natriumsalze von $C_9$–$C_{18}$-Alkylsulfonsäure-Gemischen.

Beispiele für koagulierbare Latices, die zu den erfindungsgemäßen pulverförmigen Formmassen führen, sind Polymethylmethacrylat, Polyvinylchlorid, Polystyrol, Co- und Terpolymerisate des gegebenenfalls kern- oder seitenkettensubstituierten Styrols mit anderen harzbildenden Monomeren wie (Meth)Acrylnitril, (Meth)Acrylsäuremethylester, α-Methylstyrol, p-Methylstyrol, Vinyltoluol, sowie anderen kern- oder seitenkettensubstituierten Styrolen, N(Cyclo)-Alkylmaleinimiden, N(Alkyl)-Phenylmaleinimiden, z.B. Styrol/Acrylnitril-Copolymerisate, Styrol-Methylmethacrylat-Copolymerisate oder α-Methylstyrol/Acrylnitril-Copolymerisate, die durch Polymerisation von harzbildenden ungesättigten Verbindungen in Gegenwart einer kautschukelastischen Komponente, beispielsweise Polybutadien, Polyisopren oder Acrylatkautschuk hergestellten elastisch-thermoplastischen Polymerisate sowie Mischungen der obengenannten Thermoplastharzlatices bzw. der Latices elastisch-thermoplastischer Polymerisate mit kautschukelastischen Latices wie z.B. Polybutadien, Polyisopren, Poly-n-butylacrylat, Butadien-Styrol-Copolymerisate, Butadien-Acrylnitril-Copolymerisate bzw. Mischungen aus Thermoplastharzlatex, dem Latex eines elastisch-thermoplastischen Polymerisats und einem kautschukelastischen Latex.

Bevorzugt sind dabei solche Latices, die erhalten werden, indem man den Latex einer kautschukelastischen Komponente, beispielsweise Polybutadien oder Copolymerisate von Butadien mit Acrylnitril und/oder Styrol mit dem Latex einer harten und spröden Komponente, beispielsweise einem Styrol- oder α-Methylstyrol- oder p-Methylstyrol-Acrylnitril-Copolymerisat, und gegebenenfalls dem Latex eines elastisch-thermoplastischen Polymeren, z.B. dem Pfropfprodukt eines harzbildenden Monomeren, wie z.B. Styrol, α-Methylstyrol, p-Methylstyrol, (Meth)Acrylnitril oder (Meth)Acrylsäuremethylester bzw. deren Gemische auf Polybutadien, mischt und die Latexmischung dann unter Verwendung des oben beschriebenen Fällungsreagenzes erfindungsgemäß koaguliert.

Bevorzugt sind außerdem Latices von ABS-Polymerisaten z.B. der folgenden Zusammensetzung:

(A) 5 bis 100 Gew.-%, vorzugsweise 5 bis 80 Gew.-%, eines Pfropfmischpolymerisats, hergestellt durch Pfropfpolymerisation von

a) 10 bis 95 Gew.-%, vorzugsweise 10 bis 80 Gew.-%, einer Mischung aus

1. 50 bis 90 Gew.-% Styrol, Alkylstyrol, Methylmethacrylat oder Mischungen daraus,

2. 50 bis 10 Gew.-% Acrylnitril, Alkylacrylnitril, Alkylmethacrylat oder Mischungen daraus auf

b) 90 bis 5 Gew.-%, vorzugsweise 90 bis 20 Gew.-%, eines Polymerisats eines konjugierten Diolefins mit einem Anteil von mindestens 80 Gew.-% einpolymerisiertem, konjugiertem Diolefin und

(B) 95 bis 0 Gew.-%, vorzugsweise 95 bis 20 Gew.-%, eines thermoplastischen Mischpolymerisats aus

a) 50 bis 95 Gew.-% Styrol, Alkylstyrol, Methylmethacrylat oder Mischungen daraus,

b) 50 bis 5 Gew.-% Acrylnitril, Alkylacrylnitril, Alkylmethacrylat oder Mischungen daraus,

wobei die Summe der harzbildenden Monomeren in den Komponenten (A) und (B) zusammengenommen 40 Gew.-% nicht unterschreiten sollte.

Die erfindungsgemäßen pulverförmigen ABS-Formmassen können z.B. wie folgt hergestellt werden:

(a) Man stellt durch Emulsionspolymerisation ein Pfropfpolymerisat A) bzw. ein Copolymerist B) her, vermischt die Latices und koaguliert die resultierende Emulsion unter Verwendung des Fällungsreagenzes aus teilverseiftem Polyvinylacetat und Carbonsäure.

(b) Man pfropft innerhalb der angegebenen Grenzen die harzbildenden Monomeren insgesamt auf den Dienkautschuk auf und koaguliert dann die anfallende Pfropf-polymerisat-Emulsion unter Verwendung des Fällungsreagenzes aus teilverseiftem Polyvinylacetat und Carbonsäure. Die aus den so hergestellten ABS-Formmassen durch Spritzgußverarbeitung erhaltenen Formkörper zeigen einen deutlich verbesserten Oberflächenglanz.

Beispiele und Vergleichsbeispiele

In den nachfolgenden Beispielen wird die Erfindung näher erläutert. Die angegebenen Teile sind Gewichtsteile und beziehen sich immer auf Festbe-standteile bzw. polymerisierbare Bestandteile; % be-deutet Gewichtsprozent, wenn nichts anderes angegeben ist.

Beispiel 1

Ein Gemisch aus 3,8 kg eines 33%igen Pfropfpolymerisatlatex von 35 Teilen Styrol und 15 Teilen Acrylnitril auf 50 Teile Polybutadien, bei dessen Herstellung 1,5 Teile des Natriumsalzes der disproportionierten Abietinsäure als Emulgator verwendet wurden, 7,2 kg eines 45%igen Styrol-Acrylnitril-Co-polymerisatlatex, hergestellt durch Copolymerisa-tion von 72 Teilen Styrol und 28 Teilen Acrylnitril unter Verwendung von 2,0 Teilen des Natriumsalzes der disproportionierten Abietinsäure als Emulgator und 2,3 kg eines 22%igen Copolymerisatlatex aus 65 Teilen Butadien und 35 Teilen Acrylnitril, der unter Verwendung von 2,0 Teilen des Natriumsalzes einer n-Alkylsulfonsäure als Emulgator hergestellt wurde, wird zu einer Lösung von 50 g teilverseiftem Polyvinylacetat (Mowiol 26-88 der Hoechst AG) und 50 g Eisessig in 25 l entsalztem Wasser dosiert und bis zur Aushärtung des Polymerisats bei 98°C gerührt. Die Isolierung des Polymerengemisches erfolgt durch Filtration des heißen Fällgemisches über ein Planfilter. Das ablaufende Filtrat ist klar und enthält keine Polymerisatanteile.

Vergleichsbeispiel A

Das in Beispiel 1 beschriebene Latexgemisch wird bei Raumtemperatur in einem Fällkessel mit Propellerrührer zu einer Lösung von 740 g Magnesiumsulfat (MgSO₄·7H₂O) und 372 g Essigsäure in 37,1 l entsalztem Wasser dosiert, auf 95°C erwärmt und bis zur Aushärtung der Polymerisatkörner gerührt. Nach Filtration des Fällgemisches wird das Polymerisatpulver getrocknet. Die abgetrennte wäßrige Phase enthält einen geringen Gehalt an Schwebeteilchen.

Vergleichsbeispiel B

Das in Beispiel 1 beschriebene Latexgemisch wird bei Raumtemperatur in einem Fällkessel mit Propellerrührer zu einer Lösung von 495 g Magne-siumsulfat (MgSo₄·7H₂O)und 248 g Essigsäure in 37,1 l entsalztem Wasser gegeben, auf 95°C erwärmt und bis zur Aushärtung der Polymerisatkörner gerührt, wonach das Fällgemisch filtriert wird. Die abgetrennte wäßrige Phase enthält einen Anteil von etwa 1,7 Gew.-% an nicht ausgefälltem Polymerisatlatex.

Vergleichsbeispiel C

Das in Beispiel 1 beschriebene Latexgemisch wird bei Raumtemperatur in einem Fällkessel mit Propellerrührer zu einer Lösung von 50 g teilverseiftem Polyvinylacetat (Mowiol 26-88 der Hoechst AG) in 25 l entsalztem Wasser dosiert und 30 min. bei 98°C gerührt. Anschließende Filtration des heißen Fällgemisches über einen Planfilter und Trocknung des Feststoffs ergibt eine ausgefällte Menge von 4,4 kg Polymerisat. Die restliche Polymerisatmenge (12 Gew.-% der eingesetzten Menge) liegt noch in der Latexform vor.

Vergleichsbeispiel D

Das in Beispiel 1 beschriebene Latexgemisch wird bei Raumtemperatur in einem Fällkessel mit Propellerrührer zu einer Lösung von 50 g Eisessig in

25 l entsalztem Wasser dosiert und 30 min. lang bei 98°C gerührt. Danach liegen immer noch 28 Gew.-% der eingesetzten Polymerisatmenge in der Latexform vor; eine vollständige Koagulation ist nicht möglich.

Beispiel 2

Ein Gemisch aus 9,45 kg eines 45%igen Styrol-Acrylnitril-Copolymerisatlatex, hergestellt durch Copolymerisation von 72 Teilen Styrol und 28 Teilen Acrylnitril unter Verwendung von 2,0 Teilen des Natriumsalzes der disproportionierten Abietinsäure als Emulgator und 1,12 kg eines 67%igen Copolymerisatlatex aus 32 Teilen Styrol und 78 Teilen Butadien, der unter Einsatz von 1,5 Teilen des Natriumsalzes der disproportionierten Abietinsäure hergestellt wurde, wird zu einer Lösung von 40 g teilverseiftem Polyvinylacetat (Mowiol 18-88 der Hoechst AG) und 50 g Eisessig in 30 l entsalztem Wasser dosiert und bis zur Aushärtung der Polymerisatkörner gerührt. Die Isolierung des Polymergemisches erfolgt durch Filtration der heißen Fällmischung. Das Filtratwasser ist klar und frei von Latexanteilen.

Beispiel 3

Ein Gemisch aus 6,0 kg eines 33%igen Pfropfpolymerisatlatex von 35 Teilen Styrol und 15 Teilen Acrylnitril auf 50 Teile Polybutadien, bei dessen Herstellung 1,5 Teile des Natriumsalzes der disproportionierten Abietinsäure als Emulgator verwendet wurden, und 6,7 kg eines 45%igen Styrol-Acrylnitril-Copolymerisatlatex, hergestellt durch Copolymerisation von 72 Teilen Styrol und 28 Teilen Acrylnitril unter Verwendung von 2,0 Teilen des Natriumsalzes der disproportionierten Abietinsäure als Emulgator, wird bei 40°C zu einer Lösung von 25 g teilverseiftem Polyvinylacetat (Mowiol 26-88 der Hoechst AG) und 25 g Eisessig in 25 l entsalztem Wasser dosiert. Die Mischung wird unter Rühren auf 95 bis 98°C erwärmt und bis zur Aushärtung der Polymerkörnchen gerührt. Die Aufarbeitung erfolgt durch Filtration des heißen Fällgemisches und Trocknen des Polymerisats. Das Filtrat ist klar und enthält keine Reste des eingesetzten Latex.

Beispiel 4

Eine Mischung von 13,6 kg eines 33%igen Pfropfpolymerisatlatex von 35 Teilen Styrol und 15 Teilen Acrylnitril auf 50 Teile Polybutadien, bei dessen Herstellung 1,5 Teile des Natriumsalzes der disproportionierten Abietinsäure als Emulgator verwendet wurden, und 1,4 kg eines 37%igen Poly-n-butylacrylatlatex, der unter Verwendung von 1,3 Teilen des Natriumsalzes von $C_9$–$C_{18}$-Alkylsulfonsäuregemischen hergestellt wurde, wird bei Raumtemperatur zu einer Lösung von 45 g teilverseiftem Polyvinylacetat (Mowiol 18-88 der Hoechst AG) und 50 g Eisessig in 25 l entsalztem Wasser dosiert. Unter Rühren wird auf 98°C erwärmt und durch Filtration der heißen Fällungsmischung aufgearbeitet. Die abgetrennte wäßrige Phase ist klar und enthält keine Polymerisatanteile.

Die nach Durchführung der Fällungen (Beispiele 1 bis 4 und Vergleichsbeispiele A bis D) erhaltenen Filtratwässer wurden jeweils durch Methanolzusatz und Filtration von eventuell vorhandenem Latexanteil befreit, wonach die Lösungen eingedampft und der Salzgehalt bestimmt wurde.

Die Ergebnisse sind in Tabelle 1 zusamengestellt.

Danach kann der Salzgehalt im Abwasser durch Einsatz des erfindungsgemäßen Fällungsreagenzes drastisch reduziert werden.

Tabelle 1: Untersuchungen am Filtratabwasser

| Beispiel Nr. | Salzgehalt des Filtratwassers (mg/l) | durch Methanol koagulierbare Latexanteile im Filtratwasser |
|---|---|---|
| 1 | 39 | keine |
| A (Vergleich) | 6226 | gering |
| B (Vergleich) | 3759 | viel |
| C (Vergleich) | 19 | sehr viel |
| D (Vergleich) | 43 | sehr viel |
| 2 | 48 | keine |
| 3 | 27 | keine |
| 4 | 31 | keine |

Beispiel 5

In einem Fällkessel mit Propellerrührer wird eine Fällösung aus 24,7 l entsalztem Wasser und 24,7 g teilverseiftem Polyvinylacetat (Mowiol 26-88 der Hoechst AG) bereitet. Zu dieser Lösung werden bei Raumtemperatur 15 kg eines 33%igen Pfropfpolymerisatlatex von 35 Teilen Styrol und 15 Teilen Acrylnitril auf 50 Teile Polybutadien, bei dessen Herstellung 1,5 Teile des Natriumsalzes der disproportionierten Abietinsäure als Emulgator verwendet wurden, eindosiert, wonach auf 80 bis 85°C erwärmt wird. Bei einsetztender Koagulation werden 24,7 g Eisessig zugesetzt und bis zur Aushärtung der Polymerisatkörner bei 95°C gerührt. Das Polymerisatpulver wird durch Filtration des heißen Fällgemisches von der wäßrigen Phase getrennt und getrocknet. Das abgetrennte Wasser ist klar und frei von Polymerisatanteilen.

Vergleichsbeispiel E

15 kg des in Beispiel 5 beschriebenen Latex werden bei Raumtemperatur in einem Fällkessel mit Propellerrührer zu einer Lösung von 495 g Magnesiumsulfat ($MgSO_4 \cdot 7H_2O$) und 248 g Essigsäure in 24,7 l entsalztem Wasser dosiert, auf 95°C erwärmt und bis zur Aushärtung der Polymerisatkörner gerührt. Nach Filtration des Fällgemisches wird das Polymerisatpulver getrocknet. Die abgetrennte wäßrige Phase enthält einen geringen Gehalt an Schwebeteilchen.

Vergleichsbeispiel F

15 kg des in Beispiel 5 beschriebene Latex werden bei Raumtemperatur in einem Fällkessel mit Propellerrührer zu einer Lösung von 24,7 g teilverseiftem Polyvinylacetat (Mowiol 26-88 der Hoechst AG) in 24,7 l entsalztem Wasser dosiert und auf 95°C erwärmt. Selbst nach 30minütigem Rühren bei dieser Temperatur liegen noch 4,5 Gew.-% der eingesetzten Polymerisatmenge in der Latexform vor; eine vollständige Koagulation ist nicht möglich.

Vergleichsbeispiel G

15 kg des in Beispiel 5 beschriebenen Latex werden bei Raumtemperatur in einem Fällkessel mit Propellerrührer zu einer Lösung von 24,7 g Eisessig in 24,7 l entsalztem Wasser dosiert und auf 95°C erwärmt. Nach 30minütigem Rühren bei dieser Temperatur wird heiß abfiltriert. Es werden nach Trocknung 4,52 kg Polymerisat erhalten, die restliche Polymerisatmenge (8,6 Gew.-% der eingesetzten Menge) liegt noch in der Latexform vor.

Beispiel 6

15 kg des in Beispiel 5 beschriebenen Latex werden in einem Fällkessel unter Rühren mit einem aus 495 g 5%iger wäßriger Lösung eines teilverseiften Polyvinylacetats (Mowiol 26-88 der Hoechst AG) und 24 g Eisessig bestehendem Gemisch versetzt und 10 min. bei 95°C gerührt. Das pastenförmig anfallende Koagulat wird durch Filtration über ein Planfilter entwässert und anschließend getrocknet. Das abgetrennte Wasser ist klar und frei von Polymerisatanteilen.

Beispiel 7

15 kg eines 33%igen Pfropfpolymerisatlatex von 35 Teilen Styrol und 15 Teilen Acrylnitril auf 200 Teile Polybutadien, bei dessen Herstellung 1,0 Teile des Kaliumsalzes der Ölsäure als Emulgator verwendet wurden, werden in einen Fällkessel mit Propellerrührer gegeben, in dem eine Lösung von 19,8 g teilverseiftem Polyvinylacetat (Mowiol 18-88 der Hoechst AG) und 29,7 g Eisessig in 24,7 l entsalztem Wasser vorgelegt wurde. Das Gemisch wird unter Rühren auf 95°C erwärmt und bis zur Aushärtung der Polymerisatkörner bei dieser Temperatur gehalten. Die Isolatioin des Polymeren erfolgt durch Filtration der heißen Fällmischung. Das Filtrat ist klar und enthält keine Polymerisatteilchen.

Beispiel 8

10 kg eines 45%igen Styrol-Acrylnitril-Copolymerisatlatex, hergestellt durch Copolymerisation von 72 Teilen Styrol und 28 Teilen Acrylnitril unter Verwendung von 2,0 Teilen des Natriumsalzes der disproportionierten Abietinsäure als Emulgator, werden bei 40°C zu einer Lösung von 22,5 g teilverseiftem Polyvinylacetat (Mowiol 26-88 der Hoechst AG) und 22,5 g Eisessig in 22,5 l entsalztem Wasser in einen Fällkessel mit Propellerrührer gegeben, wonach das Gemisch auf 95°C erwärmt und bis zur Aushärtung der Polymerisatkörner bei dieser Temperatur gerührt wird. Die Abtrennung des Polymerisats erfolgt durch Filtration des heißen Fällgemisches über einen Planfilter. Das ablaufende klare Wasser ist frei von Polymerisatanteilen.

Beispiel 9

Ein Gemisch aus 6 kg des in Beispiel 5 verwendeten Latex und 6,7 kg des in Beispiel 8 eingesetzten Latex wird zu einer Lösung von 25 g teilverseiftem Polyvinylacetat (Mowiol 18-88 der Hoechst AG) und 25 g Eisessig in 25 l entsalztem Wasser dosiert. Die Mischung wird unter Rühren auf 95 bis 98°C erwärmt und bis zur Aushärtung der Polymerkörnchen gerührt. Die Aufarbeitung erfolgt durch Filtration des heißen Fällgemisches und Trocknen des Polymerisats. Das Filtrat ist klar und enthält keine Reste des eingesetzten Latex.

Vergleichsbeispiel H

Das in Beispiel 9 beschriebene Latexgemisch wird unter Rühren in eine Lösung von 500 g Magnesiumsulfat (MgSO$_4 \cdot$7H$_2$O) und 250 g Eisessig in 25 l entsalztem Wasser gegeben, wonach das erhaltene Gemisch auf 95°C erwärmt wird. Es wird bis zur Polymerkornaushärtung gerührt, wonach das Polymerisat abfiltriert und getrocknet wird.

Ausprüfung der Formmassen

Die Formmassen 5, 6, 7, 9, E und H (jeweils F Teile) wurden mit H Teilen eines Styrol/Acrylnitril = 72:28-Copolymerisats mit einem M$_w$ von etwa 115 000 und einem M$_w$/M$_n - 1 \leq 2,0$, die Formmasse 8 (F Teile) mit P Teilen eines Pfropfkautschuks von 35 Teilen Styrol und 15 Teilen Acrylnitril auf 50 Teile Polybutadien und 2 Teilen eines Gleitmittels in einem Kneter gemischt und anschließend zu Normkleinstäben, einer Platte (zur Oberflächenbewertung) und einer Spirale (zur Beurteilung der Fließweglänge) verspritzt.

Die Kerbschlagzähigkeit wurde bei Raumtemperatur ($a_k^{RT}$) und bei $-40°C$ ($a_k^{-40°C}$) nach DIN 53 453 (Einheit: kJ/m²), die Kugeldruckhärte (H$_c$) nach DIN 53 456 (Einheit: N/mm²), die Wärmeformbeständigkeit (Vicat B) nach DIN 53 460 (Einheit: °C) und die Fließweglänge bei 220°C an einer Spirale von etwa 8 mm Breite und etwa 2 mm Stärke (Einheit: cm) gemessen. Der Glanz wurde nach der Skala A–H gemäß DE-AS 24 20 358 beurteilt.

Wie aus Tabelle 2 ersichtlich ist, führt der Einsatz der erfindungsgemäßen Formmassen zu Formkörpern mit besserem Oberflächenglanz.

Tabelle 2: Zusammensetzungen und Prüfdaten der Abmischungen

| Eingesetzte Formmasse aus Beispiel Nr. | F | H | P | $a_k^{RT}$ | $a_k^{-40°C}$ | $H_c$ | Vicat B | Fließlän-ge | Glanzs-tufe |
|---|---|---|---|---|---|---|---|---|---|
| 5 | 40 | 60 | – | 18 | 11 | 90 | 97 | 40 | F |
| 5 | 60 | 40 | – | 20 | 15 | 63 | 93 | 36 | F |
| E (Vergleich) | 40 | 60 | – | 17 | 11 | 90 | 96 | 40 | D–E |
| E (Vergleich) | 60 | 40 | – | 19 | 15 | 62 | 92 | 35 | D |
| 6 | 40 | 60 | – | 18 | 10 | 91 | 97 | 39 | F |
| 6 | 60 | 40 | – | 21 | 15 | 64 | 93 | 35 | F |
| 7 | 25 | 75 | – | 16,5 | 8 | 88 | 96 | 42 | E |
| 7 | 35 | 65 | – | 20 | 13 | 63 | 92 | 37 | E |
| 8 | 60 | – | 40 | 17,5 | 12 | 91 | 97 | 41 | F |
| 8 | 40 | – | 60 | 19,5 | 14 | 65 | 94 | 36 | F |
| 9 | 100 | – | – | 18 | 12 | 91 | 98 | 41 | F |
| H (Vergleich) | 100 | – | – | 18,5 | 12 | 90 | 98 | 40 | D–E |

## Patentansprüche

1. Elastisch-thermoplastische und thermoplastische pulverförmige Formmassen bzw. deren thermoplastisch verarbeitbare Gemische mit elastischen Formmassen, dadurch gekennzeichnet, daß die unter Verwendung von ≤5 Gew.-Teilen (bezogen auf 100 Gew.-Teile Latexfeststoff) eines anionischen Emulgators hergestellten und in Form ihrer Latices vorliegenden Formmassen unter Verwendung eines Fällungsreagenzes aus

A) 0,1 bis 3,0 Gew.-% (bezogen auf den Latexfeststoff) eines Polyvinylacetats mit einem Molekulargewicht von 30 000 bis 150 000 und einem Verseifungsgrad zwischen 60% und 96% in Form einer wäßrigen Lösung und

B) 0,01 bis 1,0 Gew.-% (bezogen auf den Latexfeststoff) eines Protonendonators, vorzugsweise einer Carbonsäure,

bei Temperaturen zwischen 75°C und 140°C koaguliert und die erhaltenen Formmassen durch Filtration, Abzentrifugieren oder sonstige Trennverfahren aus der 60°C bis 140°C heißen wäßrigen Phase isoliert werden.

2. Elastisch-thermoplastische und thermoplastische Formmassen bzw. deren thermoplastisch verarbeitbare Gemische mit elastischen Formmassen gemäß Anspruch 1, dadurch gekennzeichnet, daß als Protonendonator Essigsäure eingesetzt wird.

## Claims

1. Elastic-thermoplastic and thermoplastic pulverulent moulding compounds and their thermoplastically processible mixtures with elastic moulding compounds, characterised in that the moulding compounds which are prepared using ≤5 parts by weight (based on 100 parts by weight of latex solids) of an anionic emulsifier and are present in the form of their latices are coagulated by means of a precipitating agent composed of

A) 0.1 to 3.0% by weight (based on the latex solids) of a polyvinyl acetate having a molecular weight of from 30 000 to 150 000 and a degree of saponification of from 60% to 96% in the form of an aqueous solution and

B) 0.01 to 1.0% by weight (based on the latex solids) of a proton donor, preferably a carboxylic acid,

at temperatures from 75°C to 140°C and the resulting moulding compounds are isolated from the aqueous phase which is at a temperature of 60°C to 140°C by filtration, centrifuging or other methods of separation.

2. Elastic-thermoplastic and thermoplastic moulding compounds and their thermoplastically processible mixtures with elastic moulding compounds according to claim 1, characterised in that the proton donor used is acetic acid.

## Revendications

1. Compositions à mouler élasto-thermoplastiques et thermoplastiques en poudre et leurs mélanges aptes à la mise en œuvre thermoplastique avec des compositions élastiques à mouler, caractérisées en ce que les compositions à mouler préparées en utilisant 5 ou moins de 5 parties en poids (pour 100 parties en poids de latex sur base sèche) d'un émulsionnant anionique et se présentant sous la forme de leurs latex sont coagulées à des températures de 75 à 140°C en utilisant un réactif précipitant constitué

A) de 0,1 à 3,0% en poids (par rapport au latex sur base sèche) d'un polyacétate de vinyle ayant un poids moléculaire de 30 000 à 150 000 et un degré de saponification compris entre 60% et 96% sous la forme d'une solution aqueuse et

B) de 0,01 à 1,0% en poids (par rapport au latex sur base sèche) d'un donneur de protons, de préférence un acide carboxylique,

et les compositions à mouler obtenues sont isolées de la phase aqueuse chaude à 60–140°C par filtration, par centrifugation ou par d'autres opérations de séparation.

2. Compositions à mouler élasto-thermoplastiques et thermoplastiques et leurs mélanges aptes à la mise en œuvre thermoplastique avec des compositions élastiques à mouler suivant la revendication 1, caractérisées en ce qu'on utilise l'acide acétique comme donneur de protons.